(19) Europäisches Patentamt
European Patent Office
Office européen des brevets

(11) Veröffentlichungsnummer: **0 191 916**
**B1**

(12) **EUROPÄISCHE PATENTSCHRIFT**

(45) Veröffentlichungstag der Patentschrift: **27.06.90**

(51) Int. Cl.$^5$: **C 08 G 64/18,** C 08 G 63/66

(21) Anmeldenummer: **85115206.6**

(22) Anmeldetag: **30.11.85**

# (54) Block-Polyether-Poly(ester)-carbonaten.

(30) Priorität: **13.12.84 DE 3445440**
**16.07.85 DE 3525337**

(43) Veröffentlichungstag der Anmeldung:
**27.08.86 Patentblatt 86/35**

(45) Bekanntmachung des Hinweises auf die Patenterteilung:
**27.06.90 Patentblatt 90/26**

(84) Benannte Vertragsstaaten:
**DE FR GB IT**

(56) Entgegenhaltungen:
**EP-A-0 115 641**
**EP-A-0 122 412**
**DE-A-3 211 636**
**GB-A-1 182 720**
**US-A-4 374 959**

(73) Patentinhaber: **BAYER AG**
**D-5090 Leverkusen 1 Bayerwerk (DE)**

(72) Erfinder: **Freitag, Dieter Dr.**
**Hasenheide 10**
**D-4150 Krefeld (DE)**
Erfinder: **Bottenbruch, Ludwig, Dr.**
**Wöhlerstrasse 5**
**D-4150 Krefeld (DE)**
Erfinder: **Wilms, Klaus Günter, Dr.**
**Pommernallee 18**
**D-4047 Dormagen (DE)**
Erfinder: **Tacke, Peter, Dr.**
**Brandenburger Strasse 12**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Aus der DE—OS 33 08 421 (und EP—A—122 412) sind bifunktionelle aromatische Polyphenylenoxide der Formel (I)

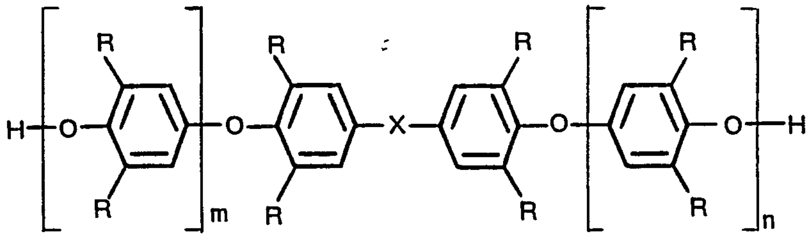

(I)

in welcher

R gleich oder verschieden ist und für Wasserstoff oder einen Alkylrest mit 1 bis 4 C-Atomen, steht,

X für eine Gruppe

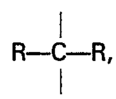

in der R die vorstehende Bedeutung hat, —O—, —S— oder —$SO_2$— und m und n für eine ganze Zahl von 1 bis 200, stehen, bekannt.

Die Herstellung dieser Polyphenylenoxide erfolgt dadurch, daß man ein Gemisch der Phenole der Formel (II) und (III)

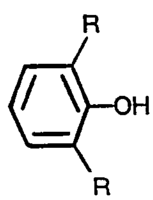

(II)

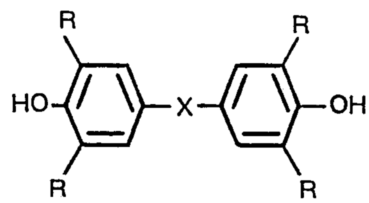

(III),

in welcher

R und X die für Formel (I) genannte Bedeutung haben, in einem organischen Lösungsmittel in Gegenwart eines Katalysators bei Temperaturen von −80°C bis +100°C, gegebenenfalls unter einem erhöhten Druck mit Sauerstoff umsetzt.

Als organische Lösungsmittel können aromatische Lösungsmittel wie Benzol, Toluol, Ethylbenzol, Nitrobenzol, halogenierte Lösungsmittel wie Tetrachlorkohlenstoff, Dichlorethan, Trichlorethylen, Tetrachlorethylen, Tetrachlorethan, Trichlorethan, Chlorbenzol und Pyridine eingesetzt werden.

Als Katalysatoren können Metallverbindungen, z.B. Halogenide, Sulfate und Oxide von Elementen der 1. und 7. Nebengruppe des Periodensystems der Elemente nach Mendelejew, (Hofmann Rüdorff, Anorganische Chemie, 19. Auflage, 1963, Seite 97, Vieweg Verlag, Braunschweig), wie CuCl, CuBr, $Cu_2SO_4$, $CuCl_2$, $MnCl_2$, $Ag_2O$ eingesetzt werden. Weiterhin können organische Basen wie Pyridin, Methylpyridin, N,N-Dimethyl-4-aminopyridin, Poly-4-vinylpyridin, Piperidin, Morpholin, Triethanolamin sowie offenkettige aliphatische Amine wie n-Butylamin, Octylamin, Dibutylamin, N,N-Dimethyl-n-hexylamin, N,N-Dimethyl-n-butylamin, Triethylamin, (N,N'-Di-tert.-butyl)ethylendiamin, 2-Aminoethanthiol, 2-Mercapto-1-ethanol, 2-Mercaptoessigsäure, 1,2-Dimercapto-4-methylbenzol, Dinatrium-1,2-dicyanoethylendithiolat, Dimercaptomaleinsäuremonoamid, Schiffsche Basen und Hydrazone, z.B. Hydrazone des Benzoins, verwendet werden.

Die Herstellung der Polyphenylenoxide erfolgt vorzugsweise bei 0°C bis 40°C; als Drücke können 0 bis 15 bar, vorzugsweise 0 bis 5 bar angewendet werden.

Pro Mol Phenol der Formel (III) werden 2 bis 400 Mol Phenol der Formel (II) eingesetzt, vorzugsweise 3 bis 20 Mol.

Das Verfahren zur Herstellung der Polyphenylenoxide (I) kann wie folgt durchgeführt werden:

Der Katalysator und der Cokatalysator werden im organischen Lösungsmittel vorgelegt und mit Sauerstoff oxidiert. Anschließend wird das Monomergemisch der Phenole der Formel (II) und (III) im organischen Lösungsmittel gelöst zugegeben und mit Sauerstoff oxidiert. Dann wird, beispielsweise durch Ausfällen mit einem Alkohol (z.B. Methanol), das bifunktionelle Polyphenylenoxid isoliert. Die Analyse des Reaktionsproduktes kann auf übliche Weise erfolgen (z.B. osmometrische Molgewichtsbestimmung, Bestimmung der phenolischen OH-Zahl z.B. durch Titration).

Gemäß dem Verfahren der DE—OS 33 08 421 können sowohl symmetrische als auch unsymmetrische bifunktionelle Polyphenylenether hergestellt werden. Im Sinne der Erfindung symmetrische Produkte werden erhalten, wenn Phenole der formel (II) und (III) eingesetzt werden, die gleiche Substituenten tragen.

Mit dem Verfahren der DE—OS 33 08 421 können Polymerblöcke mit zwei funktionellen Endgruppen hergestellt werden, die eine hohe Glasübergangstemperatur besitzen. Diese Blöcke können beispielsweise mit Säurechloriden wie Phosgen, Terephthaloylchlorid, mit Diisocyanaten, mit Carbonaten und anderen Polymerblöcken zu hochmolekularen Verbindungen umgesetzt werden. Materialien, die aus diesen hochmolekularen Verbindungen hergestellt werden, zeichnen sich durch ihre gute Wärmeformbeständigkeit aus. (Bezüglich der Verbindungen der Formel (i) ihrer Herstellung und Verwendung siehe z.B. auch DE—OS 3 300 792, EP—A—115 641 und DE—OS 3 340 493.

Das Phasengrenzflächenverfahren zur Herstellung von thermoplastischen, aromatischen Polycarbonaten ist bekannt (siehe beispielsweise US-Patente 30 28 365 und 32 75 601).

Das Phasengrenzflächenverfahren zur Herstellung von aromatischen Polyestercarbonaten ist ebenfalls bekannt (siehe beispielsweise DE—OS 30 07 934.

Bekannt ist auch der DE—OS 32 11 636 Polyphenylenetherblöcke nach dem Phasengrenzflächenverfahren in Polycarbonate einzubauen. Die dort verwendeten bifunktionellen Polyetherblöcke führen jedoch zu Block-Polyether-Polycarbonaten mit thermischer Instabilität, wodurch diese, wenn überhaupt, nur unter großen Schwierigkeiten zu brauchbaren Spritzgußartikeln verarbeitet werden können.

Die Herstellung von segmentierten Polyether-Polycarbonaten nach dem Phasengrenzflächenverfahren ist aus der DE—OS 26 36 784 bekannt.

Überraschenderweise sind die aromatischen Block-Polyether-Poly(ester)carbonate aus den Polyphenylenoxiden der Formel (I) thermisch stabil, sind somit der thermoplastischen Verarbeitung in beliebiger Weise zugänglich und liefern somit auf einfache Weise Formteile guter Qualität.

Gegenstand der vorliegenden Erfindung ist ein Verfahren zur Herstellung von aromatischen Block-Polyether-Poly(ester)carbonaten nach dem Phasengrenzflächenverfahren aus

1. hydroxylgruppenhaltigen Polyphenylenoxiden,
2. anderen Diphenolen,
3. Kettenabbrechern,
4. Phosgen,
5. bis zu 80 Mol-%, vorzugsweise bis zu 60 Mol-%, bezogen auf Mol-Summe Carbonat- und Carboxylat-Gruppen Arylendicarbonsäuredichloride und gegebenenfalls
6. 0,01 bis 1 Mol-%, bezogen auf Mole Diphenole gemäß der Summe der Komponenten 1. und 2., Verzweigern,

das dadurch gekennzeichnet ist, daß man als Komponente 1. Polyphenylenoxide der Formel (I) in Mengen von 5 Gew.-% bis 95 Gew.-%, vorzugsweise von 10 Gew.-% bis 95 Gew.-% und insbesondere von 20 Gew.-% bis 60 Gew.-%, bezogen jeweils auf das Gesamtgewicht des resultierenden Block-Polyether-Poly(ester)carbonats, und als Komponente 5. Gemische von Terephthal- und Isophthalsäuredichloriden im Verhältnis 99:1 bis 1:99 einsetzt, wobei praktisch quantitative Umsetzung der Komponenten 1., 2., 3. und gegebenenfalls 6. zugrunde gelegt werden kann.

Bevorzugt einzusetzende Polyphenylenoxide der Formel (I) sind solche mit $\overline{M}n$ (Zahlenmittel, ermittelt nach der osmometrischen Methode mit $CH_2Cl_2$ als Lösungsmittel) von 600 bis 10 000, insbesondere solche, in denen "m" und "n" für eine ganze Zahl von 3 bis 20 stehen, und ganze besonders solche, mit $\overline{M}n$ von 900 bis 3000. Besonders bevorzugte Polyphenylenoxide der Formel (I) sind solche mit $R = CH_3$.

Zur Herstellung der aromatischen Block-Polyether-Poly(ester)carbonate geeignete andere Diphenole gemäß Komponente 2. haben vorzugsweise 6 bis 30 C-Atome und besitzen vorzugsweise die Struktur der Formel (IV)

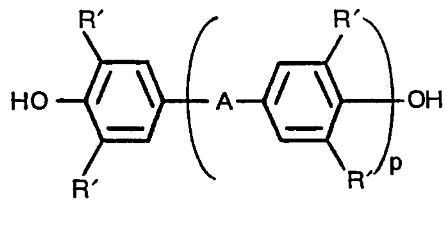

(IV)

worin

A eine Einfachbindung, ein $C_1$—$C_6$-Alkylen, $C_2$—$C_6$-Alkyliden, $C_5$—$C_6$-Cycloalkyliden,

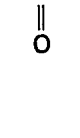

—$SO_2$— oder ein Rest der Formel (a)

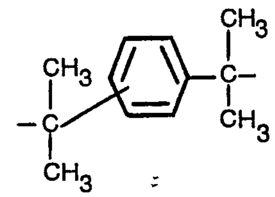

(a) ist, R' gleich oder verschieden und
H, $CH_3$, Cl oder Br ist, und p Null oder 1 ist.

Derartige andere Diphenole sind literaturbekannt, ebenso ihr Einsatz zur Herstellung von aromatischen Polycarbonaten nach dem Phasengrenzglächenverfahren (siehe beispielsweise "H. Schnell, Chemistry and Physics of Polycarbonates, Interscience Publishers, New York, 1964" US-Patent 30 38 365, DE—OS 20 63 050 und DE—OS 22 11 957).

Der Einsatz der anderen Diphenole der Formel (IV) zur Herstellung von aromatischen Polyestercarbonaten nach den Phasengrenzflächenverfahren ist ebenfalls literaturbekannt (siehe beispielsweise DE—OS 30 07 934).

Bevorzugte andere Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, α,α'-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-Dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, α,α'-Bis-(3,5-dimethyl-4-hydroxyphenyl)-p-diisopropylbenzol, 2,2-Bis-(3,5-dichlor-4-hydroxyphenyl)propan und 2,2-Bis-(3,5-dibrom-4-hydroxyphenyl)propan.

Besonders bevorzugte andere Diphenole sind z.B.:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Erfindungsgemäß geeignete Kettenabbrecher sind in bekannter Weise Monophenole wie Phenol, p-tert.-Butylphenol, p-Methylphenol, p-Isooctylphenol, p-Chlorphenol, p-Bromphenol und 2,4,6-Tribromphenol, die Chlorkohlensäure-ester dieser Phenole, sowie Monocarbonsäurechloride wie Acetylchlorid, Benzoylchlorid, Stearylchlorid und ähnliche. Sie werden in Mengen von 0,01 bis 10 Mol-%, bezogen auf Mole Diphenole, eingesetzt.

Erfindungsgemäß geeignete Verzweiger sind solche mit drei oder mehr als drei funktionellen Gruppen; wobei als funktionelle Gruppen vorzugsweise aromatische Carboxylchlorid- oder phenolische OH-Gruppen geeignet sind.

Beispiel für Verzweiger sind Trimesinsäuretrichlorid, Cyanursäuretrichlorid, 3,3'-, 4,4'-Benzophenontetracarbonsäuretetrachlorid, 1,4,5,8-Naphthalintetracarbonsäuretetrachlorid, Pyromellithsäuretetrachlorid, 1,3,5-Tri-(4-hydroxyphenyl)-benzol, 1,1,1-Tri-(4-hydroxyphenyl)-ethan, Tri-(4-hydroxy-phenyl)-phenylmethan, 2,2-Bis[4,4-bis-(4-hydroxy-phenyl)-cyclohexyl]-propan, 2,4-Bis-(4-hydroxyphenyl-isopropyl)phenol, Tetra-(4-hydroxyphenyl)-methan, 2,6-Bis-(2-hydroxy-5-methyl-benzyl)-4-methyl-phenyl, 2-(4-Hydroxyphenyl)-2-(2,4-dihydroxyphenyl)-propan, Tetra-(4-[4-hydroxyphenyl-isopropyl]-phenoxy)-methan und 1,4-Bis-[(4,4''-dihydroxytriphenyl)-methyl]-benzol.

Der Einbau von Verzweigern in Polycarbonate, auch in segmentierte Polyether-Polycarbonate nach dem Phasengrenzflächenverfahren ist bekannt (siehe dazu DE—OS 15 70 533, US—RE 27 682, DE—OS 26 36 784 (Le A 17 025) und DE—OS 27 26 376 (Le A 18 015)).

Arylendicarbonsäuredichloride gemäß Komponente 5. sind Gemische von Terephthalsäuredichloride und Isophthalsäuredichloride im Verhältnis 99:1 bis 1:99.

Anstelle der anderen Diphenole gemäß Komponente 2. können auch deren Bischlorkohlensäureester sowie Bischlorkohlensäureester von Oligocarbonaten der anderen Diphenole der Komponente 2. eingesetzt werden, wobei "Oligo", hier einen Polymerisationsgrad von 2 bis 10 bedeuten soll.

Die organische Phase des Phasengrenzflächenverfahrens besteht beispielsweise in bekannter Weise aus $CH_2Cl_2$, Chlorbenzol oder deren Gemischen.

Die alkalische wäßrige Phase hat im allgemeinen einen pH-Wert von 8 bis 14, vorzugsweise von 9 bis 13.

Das Volumenverhältnis von organischer zu anorganischer Phase beträgt im allgemeinen 1:6 bis 1:1.

Die Menge an Organischer Phase ist im allgemeinen so bemessen, daß das resultierende Block-Polyether-Poly(ester)carbonat als 0,5 bis 20 gew.-%ige Lösung anfällt.

Die Molmenge an Phosgen beträgt bis zu 150 Mol-%, bezogen auf Mol-Summe der Komponenten 1. und 2.; bei gleichzeitigem Einsatz von Dicarbonsäuredichloriden reduziert sich die Phosgenmenge um den aliquoten Teil; die einzusetzende Menge an Dicarbonsäuredichloriden erfolgt in etwa stöchiometrischen Mengen, bezogen auf Mol-Summe der Komponenten 1. und 2. und berechnet sich nach der anzustrebenden Molmenge an Carboxylat-Gruppen im Polyether-Polyestercarbonat.

Als Katalysatoren für das erfindungsgemäße Herstellungsverfahren sind tertiäre Amine und/oder

quartäre Ammoniumsalze und/oder quartäre Phosphoniumsalze in Mengen von 0,01 bis 5 Mol-%, bezogen auf Mole Diphenole der Komponenten 1. und 2., geeignet.

Bevorzugte Ammoniumsalze (Va) und bevorzugte Phosphoniumsalze (Vb) sind

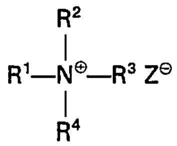
(Va)

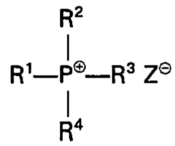
(Vb)

solche, in denen $Z^{(-)}$, $Cl^{(-)}$ oder $Br^{(-)}$ und $R^1$ bis $R^4$ gleich oder verschieden sind und $C_1$—$C_{20}$-Alkyl, $C_6$—$C_{10}$-Cycloalkyl, $C_7$—$C_{30}$-Aralkyl oder $C_1$—$C_{30}$-Alkenyl bedeuten, wobei auch zwei der Reste $R^1$ bis $R^4$ eine $C_4$—$C_{12}$-Alkylengruppe bilden können.

Bevorzugte tertiäre Amine sind solche der Formel (Vc)

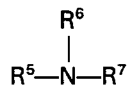
(Vc),

worin $R^5$, $R^6$ und $R^7$ gleich oder verschieden sein können und $C_1$—$C_{20}$-Alkyl oder $C_6$—$C_{10}$-Cycloalkyl bedeuten, wobei wiederum zwei der Reste $R^5$ bis $R^7$ eine $C_4$—$C_{12}$-Alkylengruppe bilden können.

Bevorzugte Katalysatoren sind Triethylamin, Tetrabutylammoniumbromid und N-Ethypiperidin.

Die Zugabe der Katalysatoren kann vor oder nach der Phosgenzugabe beziehungsweise der Arylendicarbonsäuredichloridzugabe erfolgen, vorzugsweise erfolgt sie nach der Phosgenzugabe beziehungsweise Arylendicarbonsäuredichloridzugabe.

Die Isolierung der erfindungsgemäß hergestellten aromatischen Block-Polyether-Poly(ester)carbonate erfolgt in üblicher Weise durch Eindampfen der isolierten und gereinigten organischen Phase aus dem Phasengrenzflächenverfahren, gegebenenfalls in einem Vakuumextruder.

Die erfindungsgemäß erhältlichen aromatischen Block-Polyether-Poly(ester)carbonate sind neu und haben in der Regel relative Lösungsviskositäten von 0,8 bis 2, insbesondere von 1,2 bis 1,5, gemessen an einer Lösung von 0,5 g Substanz in 100 ml $CH_2Cl_2$-Lösung.

Gegenstand der vorliegenden Erfindung sind somit außerdem die nach dem erfindungsgemäßen Verfahren erhältlichen aromatischen Block-Polyether-Poly(ester)carbonate.

Die erfindungsgemäß erhältlichen Block-Polyether-Poly(ester)carbonate können die für Polycarbonate, Polyestercarbonate oder Polyphenylenoxide üblichen Stabilisatoren gegen UV-Licht, $H_2O$ und Hitze, Entformungsmittel, Flammschutzmittel, Pigmente sowie Füllstoffe wie beispielsweise Glasfasern, Glaskugeln, Kohlestoffasern, Ruß, Kieselgur und Kaolin enthalten.

Die erfindungsgemäß erhältlichen aromatischen Block-Polyether-Poly(ester)carbonate können bei Temperaturen zwischen 250°C und 380°C durch Spritzgießen auf handelsüblichen Maschinen zu Formkörpern guter Qualität verarbeitet werden.

Die erfindungsgemäß erhältlichen aromatischen Block-Polyether-Poly(ester)carbonate können auch durch Extrusion bei Temperaturen zwischen 250°C und 380°C auf üblichen Extrudern zu Halbzeug extrudiert werden.

Die erfindnungsgemäß erhältlichen, aromatischen Block-Polyether-Poly(ester)carbonate können auch zu Folien vergossen werden, indem konzentrierte Lösungen in $CH_2Cl_2$ auf glatten Unterlagen ausgestrichen werden und das Lösungsmittel verdampft wird.

Die Formkörper und das Halbzeug aus den erfindungsgemäß erhältlichen aromatischen Block-Polyether-Poly(ester)carbonaten sind überall dort verwendbar, wo Thermoplaste mit hoher Wärmeformbeständigkeit eingesetzt werden, also beispielsweise in der Elektrotechnik.

## Beispiele

I. Herstellung von Vorprodukten

I.1) Herstellung eines Chinon-gekuppelten bifunktionellen Polyphenylenoxides gemäß Beispiel V von US-Patent 4 234 706 und DE—A— 32 11 636.

240 g 3,3',5,5'-Tetramethyl-1,4-diphenolchinon (TMDQ) und 970 g Oligo (2,6-Dimethyl-1,4-phenylenoxid) von $\overline{M}n$ (osmometrisch in bekannter Weise ermittelt) von etwa 485 werden bei 80°C in 7 l Toluol unter $N_2$ gelöst und 1 Stunde gerührt, das Reaktionsgemisch dann abgekühlt auf ca. 20°C und das Produkt mit 30 l Methanol gefällt. Das ausgefallene Material wurde abgesaugt, mit Methanol nachgewaschen und im Vakuumtrockenschrank bei 80°C getrocknet.

Das erhaltene bifunktionelle Polyphenylenoxid hat ein $\overline{M}$ von etwa 1210 (ermittelt wie vorstehend).

I.2) Herstellung eines bifunktionellen Polyphenylenoxides gemäß Beispiel 1 der DE—OS 33 08 421.

In einem zylindrischen Glasgefäß von 18 cm lichter Weite wurden 15 g CuCl, 35 g N,N-Dimethyl-4-aminopyridin in 1,2 l Chlorbenzol gelöst bzw. aufgeschlämmt und 1 Stunde Luft (100 l/h) durchgeleitet. Es wurde dann eine Lösung aus 285 g 2,2-Bis-(3,5-dimethyl-4-hydroxyphenyl)propan, 977 g 2,6-

Dimethylphenol in 8 l Chlorbenzol zugegeben und 100 l/h Luft eingeleitet. Die Temperatur stieg dabei von anfänglich 20°C auf 28°C an.

Die Reaktion wurde abgebrochen, als der Gehalt an OH-Gruppen im gelösten organischen Feststoff 2,75 Gew.-% betrug (IR-spektroskopische Bestimmung nach Eichkurve), die Lösung mit wäßriger EDTA-Trinatriumsalzlösung vom Kupfer befreit, dann mit verdünnter HCl und wäßriger $NaHCO_3$-Lösung und Wasser gewaschen.

Das beim Eindampfen der Lösung verbleibende bifunktionelle Oligophenylenoxid besaß ein $\overline{M}_n$ (osmometrisch in $CH_2Cl_2$ bestimmt) von ca. 1250.

Gemäß einer gelchromatografischen Analyse enthielt das Produkt nur ca. 2 Gew.-% monofunktionelle Anteile.

II. Herstellung von Block-Polyether-Polycarbonaten.

II.1 Vergleichsprodukt unter Verwendung von I.1).

1700 g (7,45 Mol) Bisphenol A, 33,57 g (3 Mol-%) tert.-Butylphenol wurden mit 16 Mol NaOH in 55 l Wasser gelöst. Nach Zugabe einer Lösung von 1700 g des bifunktionellen Polyphenylenoxides von Beispiel I.1), 40 l Dichlormethan wurden bei 22 bis 24°C innerhalb 2 Stunden unter heftigem Rühren 2 kg Phosgen eingeleitet und der pH-Wert der wäßrigen Phase durch Zugabe weiterer NaOH Bei 13 bis 14 gehalten.

Nach Zugabe von 20 ml N-Ethylpiperidin erforderte die Nachreaktion, weiterhin unter kräftigem Rühren, bei 22 bis 24°C und pH 13 bis 14 l Stunde.

Zur Aufarbeitung wurden die Phasen getrennt, die organische Phase angesäuert, elektrolytfrei gewaschen, mit 12 l Chlorbenzol verdünnt, das Dichlormethan abdestilliert. Die Verdampfung des Chlorbenzols erfolgte in einem Doppelschneckenextruder im Vakuum bei 380°C.

Das erhaltene Granulat war dunkelbraun gefärbt und blasig, besaß eine relative Lösungsviskosität von 1,236.

II.2 Herstellung eines Block-Polyether-Polycarbonats unter Verwendung von I.2).

Das im Beispiel II.1) beschriebene Verfahren wurde wiederholt, wobei anstelle von I.1) das Polyphenylenoxid I.2) in gleicher Menge eingesetzt wurde.

Das erhaltene Granulat war nur blaß gelb gefärbt und nicht blasig. Die relative Lösungsviskosität betrug 1,285.

III. Herstellung von Block-Polyether-Polyestercarbonaten

III.1) Vergleichsprodukt unter Verwendung von I.1).

1700 g (7,45 Mol) Bisphenol A, 33,57 g (3 Mol-%) tert.-Butylphenol wurden mit 16 Mol NaOH in 55 l Wasser gelöst.

Nach Zugabe einer Lösung von 1700 g des bifunktionellen Polyphenylenoxides I.1), in 37 l Dichlormethan, wurden bei 22 bis 24°C innerhalb 1 Stunde gleichzeitig unter heftigem Rühren 812 g (4 Mol) äquimolares Gemisch von Iso- und Terephthalsäuredichlorid in 3 l $CH_2Cl_2$ zugetropft und 300 g (3 Mol) Phosgen eingeleitet und der pH-Wert der wäßrigen Phase durch Zugabe von weiterer NaOH bei 13 bis 14 gehalten.

Im Anschluß daran wurden innerhalb 30 Minuten weitere 300 g Phosgen eingeleitet und nach Zugabe von 20 ml N-Ethylpiperidin für die Nachreaktion bei pH 13—14 weitergerührt.

Die Aufarbeitung erfolgte wie bei Beispiel II.1) beschrieben.

Das erhaltene Granulat war dunkelbraun und blasig.

Die relative Lösungsviskosität lag bei 1,267.

III.2) Herstellung eines Block-Polyether-Polyestercarbonats unter Verwendung von I.2).

Das in Beispiel III.1) beschriebene Verfahren wurde wiederholt, wobei anstelle von I.1) das Polyphenylenoxid I.2) in gleicher Menge eingesetzt wurde.

Das erhaltene Granulat war nur schwach gelb gefärbt und nicht blasig. Die relative Lösungsviskosität betrug 1.279.

Eigenschaften der Spritzgußprüfkörper aus den Produkten der Beispiele II.1), II.1), III.1), III.2)

| Eigenschaften | Maßeinh. | II.1) | II.2) | III.1) | III.2) |
|---|---|---|---|---|---|
| η rel Granulat | | 1,236 | 1,285 | 1,367 | 1,279 |
| Prüfkörper | | 1,229 | 1,282 | 1,243 | 1,276 |
| Streckspannung | MPa | 68,7 | 70,5 | 65,3 | 67,5 |
| Reißfestigkeit | MPa | 53,8 | 58,7 | 51,7 | 52,8 |
| Reißdrehnung DIN 53 455 | % | 24,3 | 23,1 | 19,6 | 21,4 |
| Schlagzähigkeit DIN 53 453 | kJ/m² | nicht gebrochen | nicht gebrochen | nicht gebrochen | nicht gebrochen |
| Kerbschlagzähigkeit DIN 53 454 | kJ/m² | 4,3 | 11,8 | 5,7 | 13,1 |
| Vicat VST/B/120 DIN 53 460 | °C | 175 | 178 | 181 | 186 |
| Aussehen: | | dunkelbraun blasig | schwach gelb | dunkelbraun blasig | leicht gelb |

**Patentansprüche**

1. Verfahren zur Herstellung von aromatischen Block-Polyether-Poly(ester)carbonaten nach dem Phasengrenzflächenverfahren aus

1. hydroxylgruppenhaltigen Polyphenylenoxiden,
2. anderen Diphenolen,
3. Kettenabbrechern,
4. Phosgen,
5. bis zu 80 Mol-%, bezogen auf Mol-Summe Carbonat- und Carboxylat-Gruppen, Arylendicarbonsäuredichloride und gegebenenfalls
6. 0,01 bis 1 Mol-%, bezogen auf Mole Diphenole gemäß der Summe der Komponenten 1. und 2., Verzweigern, dadurch gekennzeichnet, daß man als Komponente 1. Polyphenylenoxide der Formel (I)

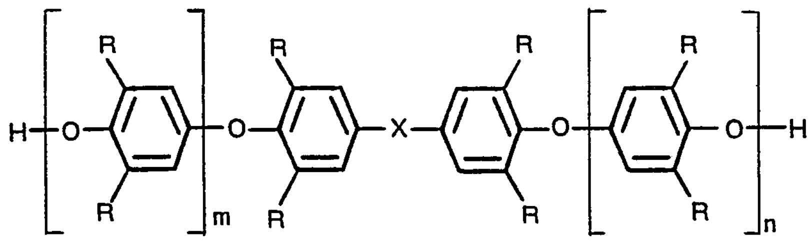

(I)

in welcher
R gleich oder verschieden ist und für Wasserstoff oder einen Alkylrest mit 1 bis 4 C-Atomen steht,
X für eine Gruppe

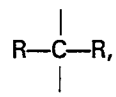

in der R die vorstehende Bedeutung hat, —O—, —S— oder —$SO_2$— und
m und n für eine ganze Zahl von 1 bis 200, stehen, in Mengen von 5 Gew.-% bis 95 Gew.-%, bezogen jeweils auf das Gesamtgewicht des resultierenden Block-Polyether-Poly(ester)-carbonats, und als Komponente 5. Gemische von Terephthalsäuredichloriden und Isophthalsäuredichloriden im Verhältnis 99:1 bis 1:99 einsetzt.

2. Verfahren Gemäß Anspruch 1, dadurch gekennzeichnet, daß man die Polyphenylenoxide der Formel (I) in Mengen von 10 Gew.-% bis 95 Gew.-% einsetzt.

3. Verfahren gemäß Anspruch 2, dadurch gekennzeichnet, daß man die Polyphenylenoxide der Formel (I) in Mengen von 20 Gew.-% bis 60 Gew.-% einsetzt.

4. Verfahren gemäß Anspruch 1 bis 3, dadurch gekennzeichnet, daß man Polyphenylenoxide der Formel (I) mit $\overline{M}n$ (Zahlenmittel) von 600 bis 10 000 einsetzt.

5. Verfahren gemäß Anspruch 4, dadurch gekennzeichnet, daß man Polyphenylenoxide der Formel (I) einsetzt, in denen "m" und "n" für eine ganze Zahl von 3 bis 20 stehen.

6. Verfahren gemäß Anspruch 5, dadurch gekennzeichnet, daß man Polyphenylenoxide der Formel (I) mit $\overline{M}n$ (Zahlenmittel) von 900 bis 3000 einsetzt.

7. Verfahren gemäß Ansprüche 1 bis 6, dadurch gekennzeichnet, daß man Polyphenylenoxide der Formel (I) einsetzt, in denen R = $CH_3$ ist.

8. Verfahren gemäß Ansprüche 1 bis 7, dadurch gekennzeichnet, daß man den für das Phasengrenzflächenverfahren notwendigen Katalysator nach der Phosgenzugabe bzw. Arylendicarbonsäuredichloridzugabe zugibt.

9. Aromatische Block-Polyether-Poly(ester)carbonate, erhältlich nach dem Verfahren der Ansprüche 1 bis 8.

**Revendications**

1. Procédé pour préparer des polymères à blocs ou séquences polyéther-poly(ester) carbonates aromatiques selon le procédé exécuté en les surfaces limites des phases, à partir

1. de poly(oxydes de phénylènes) contenant des groupes hydroxyles,
2. d'autres diphénols,
3. d'agents de rupture des chaînes,
4. du phosgène,
5. jusqu'à 80 mol %, par rapport à la somme des mol des groupes carbonates et carboxylates, de dichlorures d'acides arylènedicarboxyliques, et éventuellement

6. de 0,01 à 1 mol %, par rapport au nombre des mol de diphénol selon la somme des composants 1. et 2., d'agents de ramification,

procédé caractérisé en ce que l'on utilise, comme composants

1. des poly(oxydes de phénylènes) de formule (I):

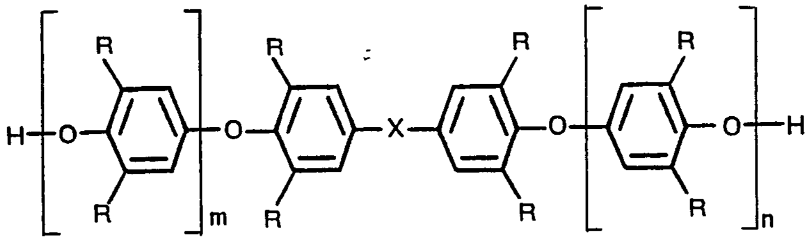

(I)

dans laquelle

les R sont identiques ou différents représentent chacun un atome d'hydrogène ou un reste alkyle ayant 1 à 4 atomes de carbone,

X représente un groupe R—C—R, dans lequel les R ont le sens précité, —O—, —S— ou —$SO_2$—, et

m et n représentent chacun un nombre entier valant 1 à 200, en des quantités de 5% en poids à 95% en poids, sur la base, chaque fois, du poids total du polyéther-poly(ester) carbonate à blocs ou séquences que l'on obtient, et, comme composant 5., on utilise des mélanges, en un rapport de 99:1 à 1:99, de dichlorures de l'acide téréphtalique et de dichlorures de l'acide isophtalique.

2. Procédé selon la revendication 1, caractérisé en ce qu'on utilise les poly(oxydes de phénylènes) de formule (I) en des quantités de 10% en poids à 95% en poids.

3. Procédé selon la revendication 2, caractérisé en ce qu'on utilise les poly(oxydes de phénylènes) de formule (I) en des quantités de 20% en poids à 60% en poids.

4. Procédé selon la revendication 1 à 3, caractérisé en ce qu'on utilise des poly(oxydes de phénylènes) de formule (I) ayant une masse moléculaire moyenne $\overline{M}_n$ (moyenne en nombre) de 600 à 10 000.

5. Procédé selon la revendication 4, caractérisé en ce qu'on utilise des poly(oxydes de phénylènes) de formule (I), dans lesquels "m" et "n" représentent chacun un nombre entier valant 3 à 20.

6. Procédé selon la revendication 5, caractérisé en ce qu'on utilise des poly(oxydes de phénylènes) de formule (I) ayant une masse moléculaire moyenne $\overline{M}_n$ (moyenne en nombre) de 900 à 3 000.

7. Procédé selon les revendications 1 à 6, caractérisé en ce qu'on utilise des poly(oxydes de phénylènes) de formule (I), dans laquelle R représente $CH_3$.

8. Procédé selon les revendications 1 à 7, caractérisé en ce qu'on ajoute le catalyseur, nécessaire pour le procédé fonctionnant en surface limite des phases, après l'addition du phosgène ou après l'addition de dichlorure d'acide arylènedicarboxylique.

9. Polyéther-poly(ester) carbonates à blocs ou séquences aromatiques, que l'on peut obtenir selon le procédé des revendications 1 à 8.

**Claims**

1. A process for the production of aromatic block polyether-poly(ester) carbonates by the interfacial method from

1. polyphenylene oxides containing hydroxyl groups,
2. other diols,
3. chain terminators,
4. phosgene,
5. up to 80 mol-%, based on the total mols carbonate and carboxylate groups, arylene dicarboxylic acid dichlorides and, optionally,
6. 0.01 to 1 mol-%, based on mols diphenols according to the sum of components 1. and 2., of branching agents, characterized in that polyphenylene oxides corresponding to formula (I)

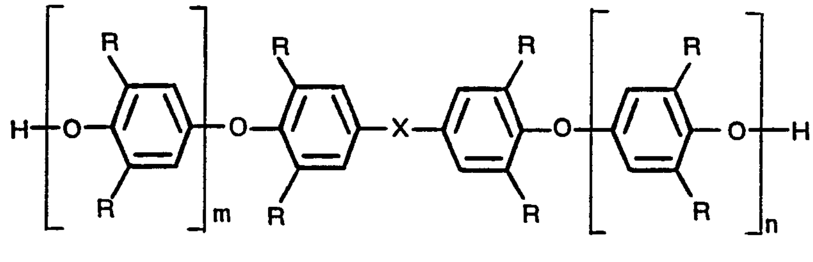

(I)

in which

the R's may be the same or different and represent hydrogen or a $C_{1-4}$ alkyl radical,

X is a group

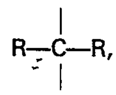

where R is as defined above, —O—, —S— or —$SO_2$— and

m and n are integers of 1 to 200,

are used in quantities of 5 to 95% by weight, based on the total weight of the resulting block polyether-poly(ester)carbonate, as component 1, and mixtures of terephthalic acid dichlorides and isophthalic acid dichlorides in a ratio of 99:1 to 1:99 are used as component 5.

2. A process as claimed in claim 1, characterized in that the polyphenylene oxides corresponding to formula (I) are used in quantities of from 10% by weight to 95% by weight.

3. A process as claimed in claim 2, characterized in that the polyphenylene oxides corresponding to formula (I) are used in quantities of from 20 to 60% by weight.

4. A process as claimed in claims 1 to 3, characterized in the polyphenylene oxides corresponding to formula (I) with number average molecular weights of 600 to 10,000 are used.

5. A process as claimed in claim 4, characterized in that polyphenylene oxides corresponding to formula (I), in which "m" and "n" are integers of 3 to 20 are used.

6. A process as claimed in claim 5, characterized in that polyphenylene oxides corresponding to formula (I) with number average molecular weights of 900 to 3000 are used.

7. A process as claimed in claims 1 to 6, characterized in that polyphenylene oxides corresponding to formula (I), in which $R = CH_3$, are used.

8. A process as claimed in claims 1 to 7, characterized in that the the catalyst required for the interfacial method is added after addition of the phosgene or the arylene dicarboxylic acid dichloride.

9. Aromatic block polyether-poly(ester) carbonates obtainable by the process claimed in claims 1 to 8.